# EUROPEAN PATENT APPLICATION

(11) **EP 0 608 421 A1**
(43) Date of publication of application: **03.08.1994**
(21) Application number: 92921332.0
(22) Date of filing: 15.10.1992
(51) Int. Cl.: B32B 9/04, B01J 19/02, B65D 85/84, C23C 28/00, C23C 8/80, B32B 15/08

(54) **METALLIC MATERIAL EXCELLENT IN RESISTANCE TO CHEMICAL SOLUTION AND CHEMICAL SOLUTION TREATING DEVICE OR PARTS THEREOF USING SAID MATERIAL**

(30) Priority: 15.10.1991 JP 295156/91
(71) Applicant: OHMI, Tadahiro, Sendai-shi Miyagi-ken 980 (JP)
(72) Inventor: OHMI, Tadahiro, Sendai-shi Miyagi-ken 980 (JP)
(74) Representative: Weitzel, Wolfgang, Dr.-Ing.
(86) International application number: JP9201339
(87) International publication number: WO9308022

(57) **Abstract**

A metallic material which is excellent in the resistance to chemical solution capable of composing a chemical solution treating device free of erosion on metallic piping, metallic devices, and metallic parts thereof as well as capable of controlling the flow rate of solution with high precision and free of pollution by chemical solution; and also intends to provide a chemical solution treating device or parts thereof using said metallic materials. The material is characterized by being provided with at least a basic member (101) composed of a metallic material, a metal fluoride layer or metal oxide layer (102) formed on the basic member (101) and fluorocarbon film (103) to cover said metal fluoride layer or metal oxide layer (102).

## Description

### Technical Field

The present invention relates to a metallic material having superior resistance to chemical solutions, as well as to a chemical solution treating device and parts used in this chemical solution treating device.

### Background Art

Conventionally, plastic materials possessing resistance to chemical solutions, such as PVF, Teflon (the brand name of a polyethylene fluoride system resin produced by E.I. du Pont de Nemours & Co. Inc.), and the like were commonly employed in devices for the supply of ultrapure water or chemical solutions, or devices which conducted treatment, such as washing, or the like, using these. The reason for this was that metallic materials react violently with HCl, H₂SO₄, HF, and the like, and are eroded, and thus could not be employed, so that plastic materials which were not eroded in this manner were used.

However, these plastic materials were beset by problems in that they were softer and more easily damaged than metals. In addition, the plastic materials could not be worked with the same high degree of precision as metallic materials, so that when plastic materials were used, for example, to produce wafer cassettes or the like, the precision was insufficient, and it was for this reason impossible to use such wafer cassettes in an automatic wafer conveying device.

A further considerable problem lay in the fact that, since chemical vapor penetrated the material such as Teflon or the like, instruments or external metallic parts were eroded as a result of the penetrating chemical vapor.

The problems present in the conventional technology will be explained in greater detail hereinbelow based on the Figures.

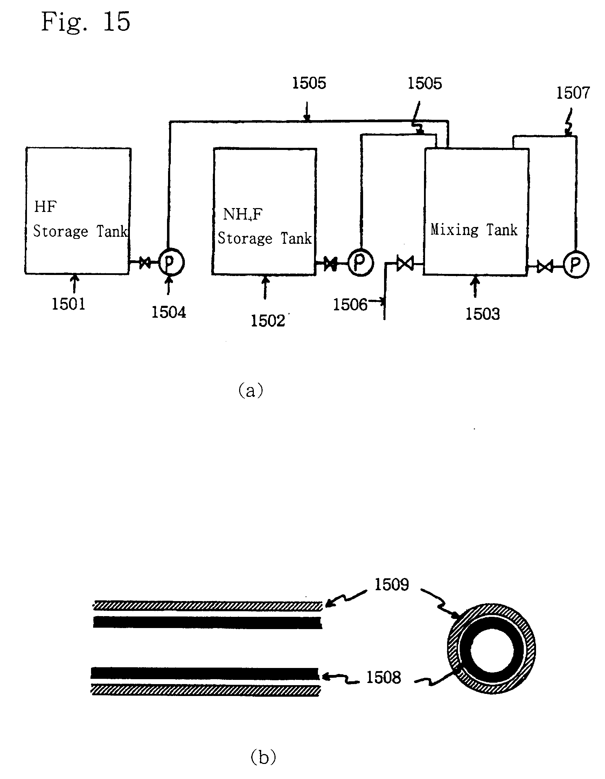

Fig. 15(a) depicts a typical chemical preparation system in accordance with the conventional technology; for example, this system mixes hydrofluoric acid, HF, and an ammonium fluoride solution, NH₄F, and produces buffered hydrofluoric acid.

In the Figure, for example, reference 1501 indicates, an HF storage tank, reference 1502 indicates an NH₄F storage tank, reference 1503 indicates a mixing tank, reference 1504 indicates a pump, references 1505 and 1507 indicate piping comprising a Teflon tube covered by a metallic tube, and reference 1506 indicates a mixture solution supply piping comprising a tube identical to that indicated by reference 1507. A cross-sectional view of this piping is shown in Fig. 15(b). Reference 1508 indicates a Teflon tube, while reference 1509 indicates a metallic tube. In the case in which the HF in storage tank 1501 and the NH₄F in storage tank 1502 are mixed in mixing tank 1503, the HF in HF storage tank 1501 is pumped up by pump 1504, the flow rate thereof is controlled by the inner diameter of piping 1505, comprising a double pipe structure in which the Teflon tube is covered by the metallic tube, and the HF is conveyed to mixing tank 1503. In the same manner, the NH₄F in NH₄F storage tank 1502 is pumped up by a pump, the flow rate thereof is controlled by the inner diameter of the piping 1505, which has a double pipe structure in which the Teflon tube is covered by the metallic tube, and is conveyed to the mixing tank 1503. In addition, the HF and NH₄F conveyed to the mixing tank 1503 are passed through circulation line 1507, which is produced in a manner identical to that of conveyance pump 1504 and conveyance piping 1505, these are circulated, and are thus mixed.

In this preparation system, the metallic piping 1509 covering the Teflon tube 1508 is eroded as a result of the chemical solution vapors passing through the Teflon tube, and the lifetime thereof is thus short. In addition, the metallic piping and the metallic parts are eroded as a result of the degradation of the Teflon, pinholes, and the like, and as a result of metallic dissolution therefrom, the chemical solution becomes contaminated. In addition, as the external metallic parts and control devices are eroded by the transmission of chemical solution vapors, and cannot be used, the mass flow controller for the chemical solution must conduct the control of the flow rate by means of the appropriate alteration of the inner diameter of the piping, and as a result, the accuracy of the control of the flow rate is strikingly poor. In order to solve these problems, the production of piping or the like using a metallic material having superior resistance to chemical solutions has been desired; however, as there has been no means for the effective prevention of metallic erosion, this has not been realized.

### Disclosure of the Invention

The present invention has as an object thereof to provide a metallic material having superior resistance to chemical solutions, capable of composing a chemical solution treating device free of erosion of metallic piping, metallic devices, and metallic parts thereof, as well as capable of controlling the flow rate of the solution with high precision and which is free of chemical solution contamination, and to provide a chemical solution treating device and parts for use in such a chemical solution treating device using these metallic materials.

The metallic materials in accordance with the present invention are provided with at least a basic member composed of a metallic material, a metal fluoride layer or metal oxide layer comprising a fluoride or oxide of the metallic material and formed on the surface of the basic member, and a fluorocarbon film covering the metal fluoride layer or metal oxide layer.

The chemical solution treating device or the parts for use in such a chemical solution treating device of the present invention are characterized in that at least those parts which are in contact with chemical solutions comprise the above metallic material.

### Function

In the present invention, by forming a metal fluoride or a metal oxide on surfaces of metallic material which come into contact with chemical solutions, and by forming a fluorocarbon film on the metal fluoride or the metal oxide, it is possible not merely to prevent the erosion of the device or the parts by means of the chemical solution penetrating the fluorocarbon film, but also to prevent contamination of the chemical solution.

Here, what is meant by fluorocarbon is a compound of fluorine and carbon; for example, it is possible to use a polyethylene fluoride resin such as Teflon or the like. The fluorocarbon film is formed by means of thermal decomposition, by supplying a compound of fluorine and carbon such as, for example, CF₄, C₂F₆, C₃F₈, or the like, to the surface of the basic member and heating this.

### Brief Explanation of the Drawings

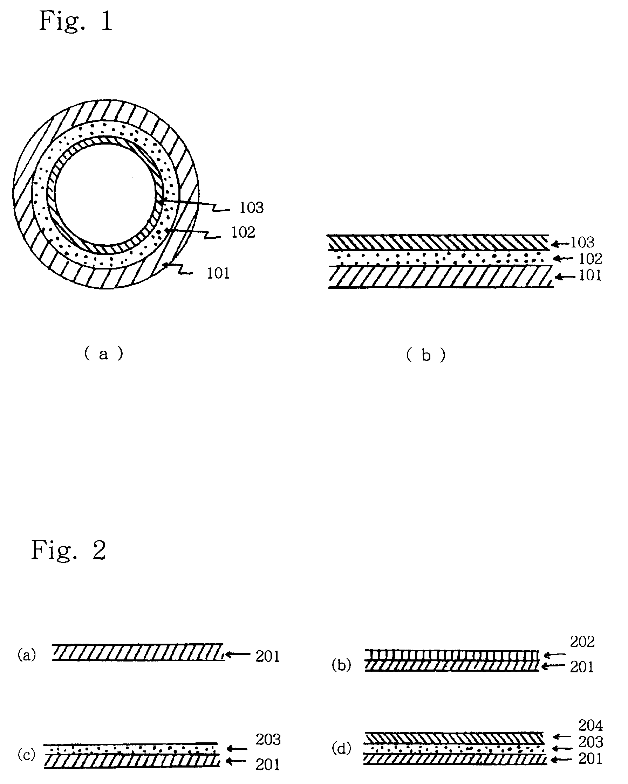

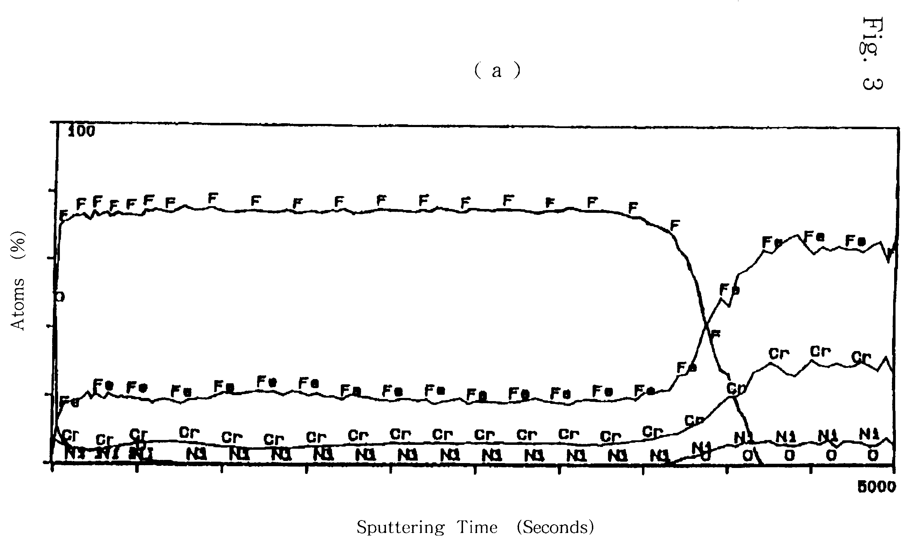

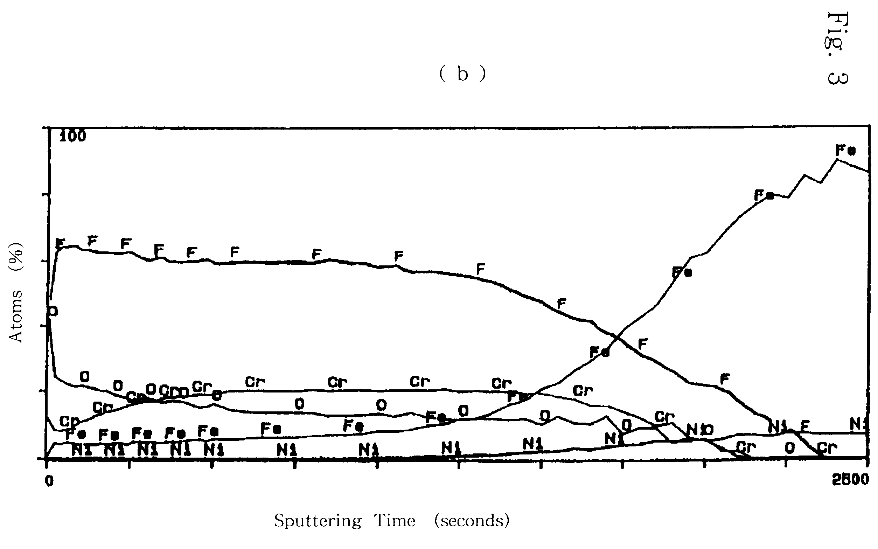

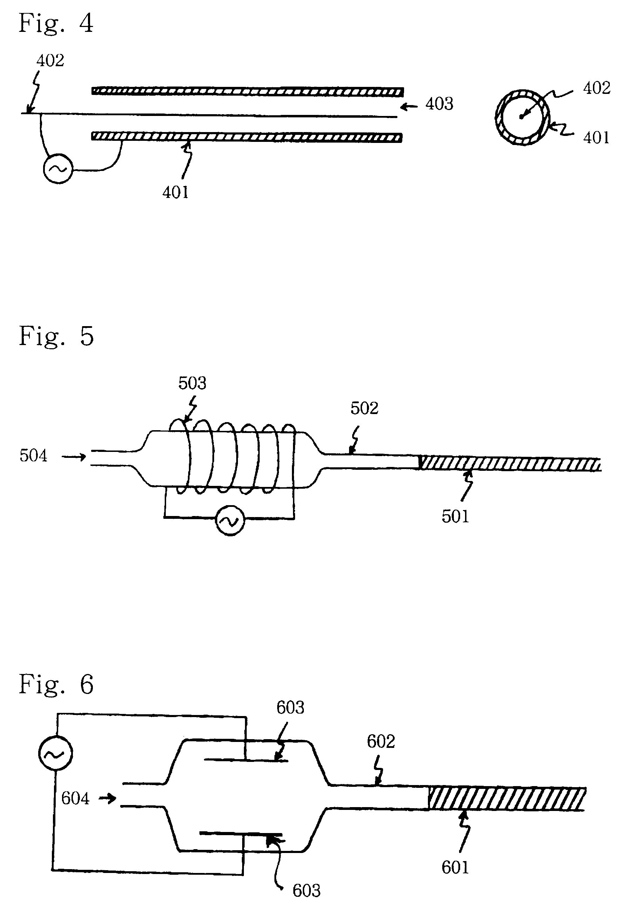

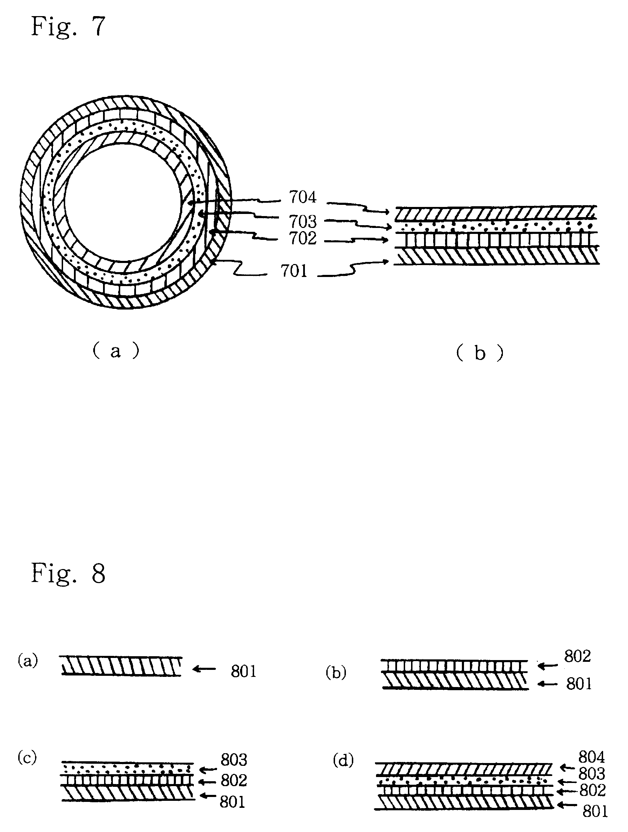

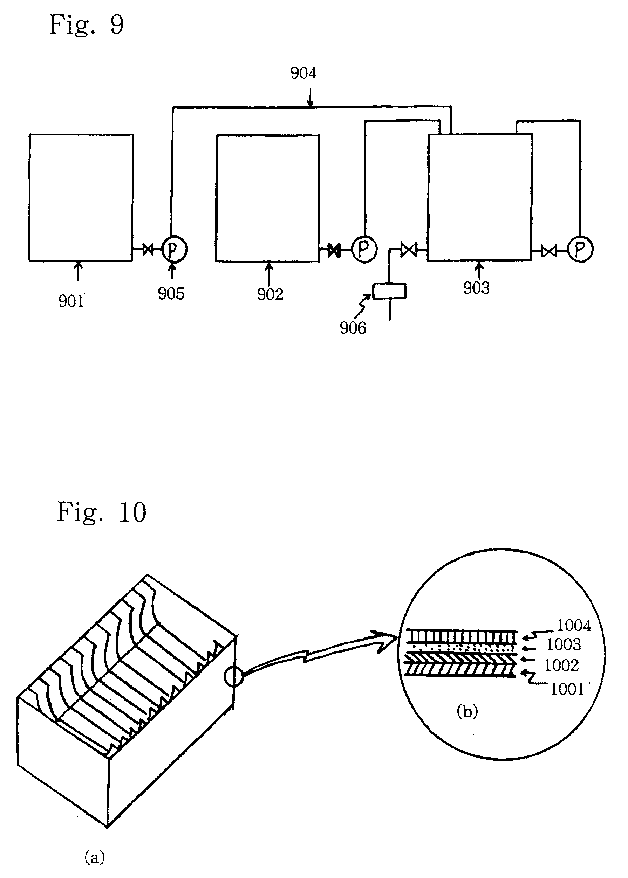

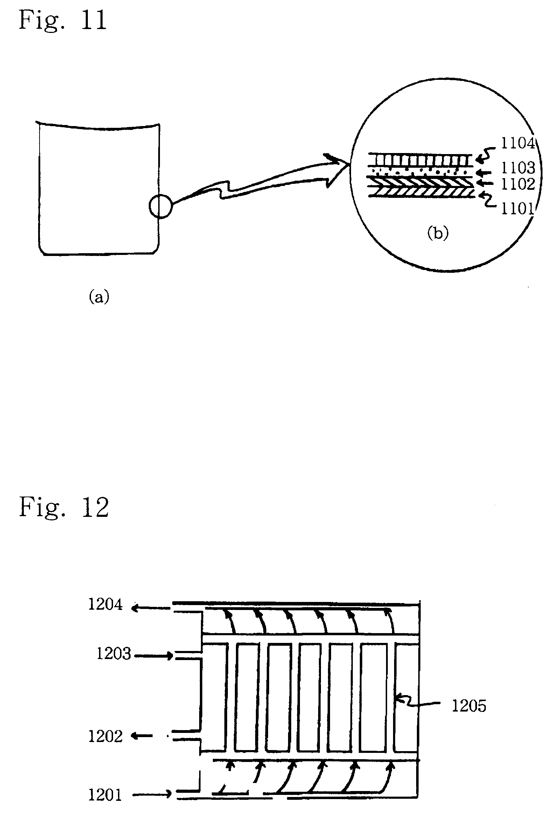

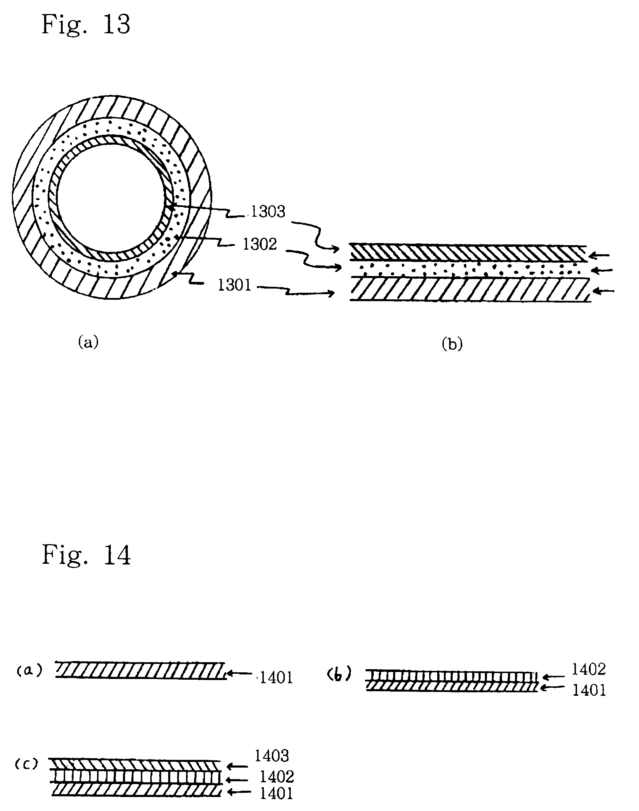

Fig. 1 shows a first embodiment of the present invention; Fig. 1(a) is a cross-sectional view of the piping for chemical supply, and Fig. 1(b) is a partially enlarged view of Fig. 1(a). Fig. 2 is a diagram showing the production process of the piping. Fig. 3(a) is a graph showing the ESCA data after fluoridation processing, while Fig. 3(b) is a graph showing the ESCA data after fluoridation treatment and the application of water. Fig. 4 is a cross-sectional view of the piping in accordance with an embodiment of the present invention. Fig. 5 is a side view of the formation apparatus of the fluorocarbon film. Fig. 6 is a side view of the formation apparatus of the fluorocarbon film. Fig. 7 is a side view of the piping in accordance with an embodiment of the present invention. Fig. 8 shows a production process for the piping shown in Fig. 7. Fig. 9 is a type diagram showing the chemical mixing system using the chemical solution device of the present invention. Fig. 10 is an angled view of a wafer cassette in accordance with an embodiment of the present invention. Fig. 11 is a side view and a partially enlarged view of a beaker in accordance with an embodiment of the present invention. Fig. 12 is a side view of a heat exchanger in accordance with an embodiment of the present invention. Fig. 13 is a side view of a piping in accordance with an embodiment of the present invention. Fig. 14 is a diagram showing the manufacturing process of the piping shown in Fig. 13. Fig. 15 shows a conventional example.

Reference 101 indicates a tube, reference 102 indicates a coating having chromium fluoride as a main component thereof, reference 103 indicates a fluorocarbon film, reference 202 indicates a coating, reference 203 indicates a coating having chromium fluoride as a main component thereof, reference 204 indicates a fluorocarbon film, reference 401 indicates a tube having chromium fluoride on the inner surface thereof, reference 402 indicates an electrode, reference 501 indicates a tube having chromium fluoride on the inner surface thereof, reference 502 indicates a quartz tube, reference 503 indicates a coil, reference 504 indicates CF₄ gas, reference 601 indicates a tube having chromium fluoride on the inner surface thereof, reference 602 indicates a quartz tube, reference 603 indicates a plane-parallel electrode, reference 701 indicates a tube, reference 702 indicates Ni plating, reference 703 indicates a coating having nickel fluoride as a main component thereof, reference 704 indicates a fluorocarbon film, reference 802 indicates Ni plating, reference 803 indicates a coating having nickel fluoride as a main component thereof, reference 804 indicates a fluorocarbon film, reference 901 indicates an HF storage tank, reference 902 indicates an NH₄F storage tank, reference 903 indicates a mixing tank, reference 904 indicates piping, reference 905 indicates a pump, reference 906 indicates a mass flow controller, reference 1001 indicates a wafer case base, reference 1002 indicates Ni plating, reference 1003 indicates a coating having nickel fluoride as a main component thereof, reference 1004 indicates a fluorocarbon film, reference 1101 indicates a beaker base comprising Al or a Al alloy, reference 1102 indicates Ni plating, reference 1103 indicates a coating having nickel fluoride as a main component thereof, reference 1104 indicates a fluorocarbon film, reference 1301 indicates a tube, reference 1302 indicates a coating having chromium oxide as a main component thereof, reference 1303 indicates a fluorocarbon film, reference 1402 indicates a coating having chromium oxide as a main component thereof, reference 1403 indicates a fluorocarbon film, reference 1501 indicates an HF storage tank, reference 1502 indicates an NH₄F storage tank, reference 1503 indicates a mixing tank, reference 1504 indicates a pump, references 1505 and 1507 indicate piping, reference 1506 indicates a mixed solution supply piping, reference 1508 indicates a Teflon tube, and reference 1509 indicates a metallic tube.

### Best Mode for Carrying Out the Invention

Embodiments in accordance with the present invention will be explained hereinbelow based on the Figures.

### (Embodiment 1)

Fig. 1 shows a first embodiment of the present invention; Fig. 1(a) shows a cross-sectional view of a piping for chemical supply comprising metal, while Fig. 1(b) is an enlarged view of the vicinity of the surface thereof.

In Fig. 1, reference 101 indicates a tube having a diameter of 1/2 inches comprising SUS316L. Reference 102 indicates a coating having chromium fluoride as a main component thereof, or reference 103 indicates a fluorocarbon film.

Fig. 2 shows a manufacturing process of the piping shown in Fig. 1.

The formation of coating 202, which has chromium fluoride as a main component thereof, can be accomplished by the fluoridation treatment for a period of 20 minutes and at a temperature of 300 degrees Celsius of the SUS316L shown in Fig. 2(a) with fluorine and gas. Reference 202 shown in Fig. 2(b) indicates a fluoride passivating coating. By applying water thereto for a period of five days, the coating 203 shown in Fig. 2(c), which has chromium fluoride as a main component thereof, is formed. Furthermore, the formation of the fluorocarbon film indicated by reference 204 in Fig. 2(d) is accomplished by means of the thermal decomposition of, for example, CF₄, C₂F₆, C₃F₈, or the like. That is to say, the piping is heated to a temperature within a range of 250 - 300 degrees Celsius, and this type of gas is introduced thereinto. When this is done, this gas thermally decomposes, and coating 203, having chromium fluoride as a main component thereof, accumulates on the surface. The thickness thereof is on the level of, for example, 5 µm; however, this thickness can be set to any level in accordance with the desired object.

Fig. 3 shows the ESCA data in the case in which water was applied to the fluoride film and this was thus converted to a film having chromium fluoride as a main component thereof.

In Fig. 3, Fig. 3(a) shows the ESCA data of the SUS316L after fluoridation treatment; this has iron fluoride as main component thereof. Fig. 3(b) shows the ESCA data after fluoridation treatment and after the application of water for a period of 5 days; this has chromium fluoride as a main component. By applying water in this manner, films having chromium fluoride as a main component can be obtained. The sputtering rate in Fig. 3(a) and Fig. 3(b) was 0.1 nm/second, and the thickness of the film having chromium fluoride as a main component thereof was 2000 Å.

In the case in which the tube of the present invention was used, for example, as a supply piping for HF, by combining a metal fluoride and Teflon, the resistance to erosion was increased in comparison with the case in which piping comprising only a metal fluoride was used. Furthermore, even if the Teflon is penetrated, or if pinholes are opened in the Teflon, as a result of the resistance to erosion of the metal fluoride, the piping is not eroded, so that there is no danger of metallic contamination from the piping. In addition, piping composed of Teflon is easily damaged, but the present basic members comprise metallic materials, so that they are characteristic in being resistant to damage. That is to say, all problems present in the conventional technology are solved.

In the above, a case was discussed in which the thickness of the chromium fluoride film was 2000 Å; however, it is of course the case that a thicker film may be employed. However, the resistance to erosion is sufficient if the thickness is on the level of several Å, and if the thickness is too great, there are problems such as peeling from the metallic basic member and the like. A thickness of less than 5000 Å is preferable.

In addition, a case was discussed in which the formation of the fluorocarbon film was conducted by means of CVD using heat; however, it is of course the case that the formation may be conducted by means of the discharging of a gas such as, for example, CF₄, C₂F₆, C₃F₈, or the like, that is to say, by means of a plasma CVD process.

At this time, an electrode 402 is introduced into a tube 401 having a diameter of 1/2 inch and having chromium fluoride on the inner surface thereof, as shown, for example, in Fig. 4, and in the presence of a CF₄ gas flow, a high frequency, for example, 13.56 MHz, is applied between the electrode and the 1/2 inch tube, and thereby, a fluorocarbon film is formed. In addition, as shown in Fig. 5, a quartz tube 502 and a tube 501 having a diameter of 1/2 inch and having chromium fluoride on the inner surface thereof are placed in contact, a coil 503 is wound around quartz tube 502, and a high frequency, for example, 13.56 MHz, is applied in the presence of a flow of a CF₄ gas 504 and an electrodeless discharge is thus conducted, and the fluorocarbon film may also be formed in this manner. In addition, as shown for example in Fig. 6, the fluorocarbon film may also be formed by bringing a quartz tube 602 and a tube 601 having a diameter of 1/2 inch and having chromium fluoride on the inner surface thereof into contact, and applying a high frequency, for example, 13.56 MHz, between the plane parallel electrodes 603 within quartz tube 602.

The case in which a frequency of 13.56 MHz was applied was discussed; however, it is of course the case that other frequencies may also be employed.

### (Embodiment 2)

In the present embodiment, in place of the SUS316L of the first embodiment, Al and a Al alloy, respectively, were employed. Fig. 7(a) shows a cross-sectional view of the piping for chemical supply comprising metal, while Fig. 7(b) shows an expanded view of the vicinity of the surface thereof.

In the Figures, reference 701 indicates a tube having a diameter of 1/2 inch and comprising, for example, Al or a Al alloy. Reference 702 indicates Ni plating, reference 703 indicates a coating having nickel fluoride as a main component thereof, and reference 704 indicates a fluorocarbon film.

Fig. 8 shows the manufacturing process of the piping shown in Fig. 7.

The formation of the coating having nickel fluoride as a main component thereof is accomplished by executing the nickel plating of reference 802 in Fig. 8(b) on the Al or Al alloy shown in Fig. 8(a) and forming the coating having nickel fluoride as a main component thereof indicated by reference 803 in Fig. 8(c) by means of the fluoridation treating thereof. Furthermore, the formation of the fluorocarbon film indicated by reference 804 in Fig. 8(d) is identical to that described in the first embodiment.

It is of course the case that the metal which is plated need not be Al, but may be any metallic material. In addition, a discussion was made with respect to Ni plating; however, it is of course the case that chromium plating, or the like, is also acceptable.

The thickness of the nickel fluoride film and the thickness of the plating may be set to any level in accordance with the desired object. In addition, it is of course also possible to make the entire plating film a fluoride film.

In the case in which the tube of the present invention is employed, for example, as a supply piping for HCl, by means of combining the metal fluoride and the Teflon, the resistance to erosion is increased in comparison to the case in which piping comprising only metal fluoride is employed. In addition, even if the Teflon is penetrated or if pinholes are opened in the Teflon, as a result of the resistance to erosion of the metal fluoride, the piping will not be eroded, so that there is absolutely no danger of metallic contamination from the piping. Furthermore, piping comprising only Teflon is susceptible to damage; however, as the present piping comprises metal, it is resistant to damage. In addition, Al is employed, so that lightness is a characteristic feature.

### (Embodiment 3)

In the present embodiment, the technology of the present invention was employed in a conventional chemical mixing system.

Fig. 9 depicts a chemical mixing system employing the technology of the present invention as a type. In the Figure, for example, reference 901 indicates an HF storage tank, reference 902 indicates an NH₄F storage tank, and reference 903 indicates a mixing tank. The technology of the present invention is applied to these tanks. Reference 904 indicates piping in accordance with the technology of the present invention, reference 905 indicates a pump in accordance with the technology of the present invention, and reference 906 indicates a mass flow controller in accordance with the technology of the present invention.

In accordance with the present invention, the erosion of the tanks and metallic pipings as a result of the chemical solution penetrating the Teflon, and the contamination of the chemical solution by means of metal dissolving from the metallic parts as a result of metallic erosion, are eliminated, and furthermore, it becomes possible to employ pumps and mass flow controllers comprising metal, so that the accuracy of flow rate control is improved, and the safety is also improved.

### (Embodiment 4)

In the present embodiment, in place of the tube of the second embodiment, the present invention is applied to a wafer casette.

Fig. 10 shows a wafer case to which the technology of the present invention has been applied.

Fig. 10(a) shows a wafer case comprising metal, while Fig. 10(b) is an enlarged view of the vicinity of the surface thereof.

In the Figures, reference 1001 indicates a wafer case base comprising Al or an Al alloy. Reference 1002 indicates Ni plating, reference 1003 indicates a coating having nickel fluoride as a main component thereof, while reference 1004 indicates a fluorocarbon film.

Because a Al alloy is employed, the molding accuracy is improved in comparison with the case in which Teflon is employed, and as this is lightweight, this is advantageous for automatic conveyance.

### (Embodiment 5)

In the present embodiment, the technology of the present invention was applied to a beaker.

In Fig. 11, a beaker to which the technology of the present invention was applied is shown. Fig. 11(a) shows a beaker comprising metal, while Fig. 11(b) is an enlarged view in the vicinity of the surface thereof.

In these Figures, reference 1101 indicates a beaker base comprising Al or a Al alloy.

Reference 1102 indicates Ni plating, reference 1103 indicates a coating having nickel fluoride as a main component thereof, while reference 1104 indicates a fluorocarbon film.

The beaker comprises metal, so that it is more resistant to damage than beakers comprising glass or Teflon. In addition, it is necessary to heat chemicals in RCA treatment or the like; however, the present beaker comprises metal, and the heat conductivity thereof is good, so that the time required can be shortened.

An example was discussed in which the present invention was applied to a small vessel such as a beaker; however, it is of course the case that this vessel may be a large-scale vessel such as a tank or the like.

### (Embodiment 6)

In the present embodiment, the technology of the present invention was applied to a heat exchanger.

In Fig. 12, a cross-sectional view of a heat exchanger to which the technology of the present invention was applied, is shown.

In the Figure, a source material, the temperature of which has been raised as a result of reaction, is introduced at the point marked 1201, and cooled source material exits from the point marked 1204. Furthermore, a solvent for heat exchange such as water, Freon, or the like is introduced from the point marked 1202, and exits from the point marked 1203. In addition, reference 1205 indicates a thin tube having a diameter of approximately 1/4 inch, and by means of employing a plurality of such tubes, the heat exchange capacity is increased.

In the present embodiment, in comparison with conventional heat exchangers employing Teflon tubes, metal tubes are employed, so that the heat conductivity is good, and the heat exchange efficiency is high. In addition, in the conventional technology, a part of the source material chemical solution leaked into the heat exchanging solvent, or the heat exchanging solvent penetrated to the source material side; however, in accordance with the technology of the present invention, there is no leakage of the chemical solution or the heat exchanging solvent.

### (Embodiment 7)

In the present embodiment, the present invention was employed in supply piping for ultrapure water.

Fig. 13(a) shows a cross-sectional view of piping, comprising metal, for ultrapure water supply, while Fig. 13(b) is an enlarged view in the vicinity of the surface thereof.

In the Figures, reference 1301 indicates a tube having a diameter of 1/2 inch and comprising, for example, SUS316L. Reference 1302 indicates a coating having chromium oxide as a main component thereof, while reference 1303 indicates a fluorocarbon film. Fig. 14 shows a manufacturing process of the piping shown in Fig. 10.

The formation of coating 1402 (Fig. 14(b)) having chromium oxide as a main component thereof is conducted by means of the reduction with hydrogen of the SUS316L indicated by reference 1101 in Fig. 14(a). The hydrogen concentration may be 100%; however, it is preferable, considering the danger of explosion, to limit the concentration to less than 3%, for example, by dilution with Ar gas. It is of course the case that the gas used for dilution need not be Ar gas. Furthermore, it is possible to increase the thickness of the film by adding oxygen. In this case, as well, considering the danger of explosion, it is preferable to conduct the process at less than 100 ppm. The reduction temperature should be greater than 300 degrees Celsius, and preferably 500 degrees Celsius.

The formation of the fluorocarbon film indicated by reference 1403 in Fig. 14(c) is conducted in a manner identical to that in the first embodiment.

### Industrial Applicability

Conventionally, as a result of the problem of metallic impurities, and the like, resin-type pipings were employed as pipings for ultrapure water supplies; however, these presented a problem in that they were easily damaged. By employing the tube of the present invention, the piping becomes damage-resistant.

In accordance with the present invention, it is possible to provide a metallic material possessing superior resistance to chemical solutions which is capable of comprising a chemical solution treating device which does not erode, is capable of accurately controlling flow rate, and which has no chemical solution contamination. Furthermore, it is possible to provide chemical solution treating devices or parts for chemical solution treating devices which do not erode, are capable of accurately controlling flow rate, and have no chemical solution contamination.

## Claims

1. A metallic material possessing superior resistance to chemical solutions, characterized in being provided with at least: a base member comprising a metallic material (including alloy materials, identical hereinbelow), a metal fluoride layer or metal oxide layer comprising a fluoride or an oxide of said metallic material formed on the surface of said basic member, and a fluorocarbon film covering said metal fluoride layer or metal oxide layer.

2. A metallic material having superior resistance to chemical solutions in accordance with Claim 1, characterized in that said metal fluoride comprises a fluoride containing as a main component thereof a fluoride of nickel or a fluoride of chromium.

3. A metallic material having superior resistance to chemical solutions in accordance with Claim 1, characterized in that said metal oxide comprises an oxide having as a main component thereof an oxide of chromium.

4. A metallic material having superior resistance to chemical solutions in accordance with Claim 2, characterized in that said metallic material comprises stainless steel, and said metal fluoride comprises a fluoride having as a main component thereof a fluoride of chromium.

5. A metallic material having superior resistance to chemical solutions in accordance with Claim 3, wherein said metallic material comprises stainless steel, and said metal oxide comprises an oxide having as a main component thereof an oxide of chromium.

6. A metallic material having superior resistance to chemical solutions in accordance with Claim 2, characterized in that said metallic material comprises one of Al and a Al alloy, and said metal fluoride comprises a fluoride having as a main component thereof a fluoride of nickel.

7. A metallic material having superior resistance to chemical solutions in accordance with Claim 1, wherein said metallic material comprises a material having nickel plating formed on a surface thereof.

8. A chemical solution treatment device or parts for a chemical solution treatment device, characterized in that at least parts coming into contact with chemical solutions comprise the metallic material in accordance with Claim 1.

9. A chemical solution treatment device or parts for a chemical solution treatment device in accordance with Claim 8, wherein said parts for a chemical solution treatment device comprise pipings.

10. A chemical solution treatment device or parts for a chemical solution treatment device in accordance with Claim 8, wherein said parts for a chemical solution treatment device comprise a wafer case.

11. A chemical solution treatment device or parts for a chemical solution treatment device in accordance with Claim 8, wherein said parts for a chemical solution treatment device comprise a beaker.
